# EUROPEAN PATENT APPLICATION

(11) **EP 1 211 457 A1**
(43) Date of publication of application: **05.06.2002**
(21) Application number: 01309995.7
(22) Date of filing: 29.11.2001
(51) Int. Cl.: F21V 8/00

(54) **Light source of illumination for light guide**

(30) Priority: 29.11.2000 JP 2000363593; 29.11.2000 JP 2000363622
(71) Applicant: TB Optical Co., Ltd., Machida-shi, Tokyo (JP)
(72) Inventor: Ariga, Sadakazu, c/o TB Optical Co. Ltd., Machida-shi, Tokyo (JP); Yagasaki, Fumio, c/o TB Optical Co. Ltd., Machida-shi, Tokyo (JP)
(74) Representative: Piésold, Alexander J.

(57) **Abstract**

At a position opposite to a first board (130(a)) supporting a fist light-emitting diode group (131) which has light-emitting portions on the same side and is arranged annularly surrounding a light-delivering hole, a concave mirror (150(a)) is located so that the focal point thereof would be formed at the position of the light-delivering hole. Behind the concave mirror (150(a)), a second board (140) supporting a second light-emitting diode group (141) is located. Light beams emitted from the first light-emitting diode group (131) are reflected by the concave mirror (150(a)) and collected on an optical connector (181), and light beams emitted from the second light-emitting diode group (141) are allowed to pass through a hole formed at the center of the concave mirror (150(a)) and directly collected on an optical connector (181). To the optical connector (181), an optical fiber cable as a light guide is connected to form a light source of illumination for a light guide (100).

## Description

The present invention relates to a light source of illumination for a light guide, which is used for inspection of e.g. qualities of industrial products on a production line, utilizing image-taking sensors such as CCD cameras, wherein the light guide is used to illuminate or light up image-taking spots . More particularly, it relates to a light source of illumination for a light guide using a light-emitting diode as the light source.

As a method for inspecting the quality of industrial products such as printed-circuit boards or semiconductors, for example, failure of soldering, defects, or attachment of foreign matters, on a production line, a method utilizing the image-taking with a CCD camera, etc. has been spread. In this method, a specific spot of a component is subjected to the image-taking and this collected image is compared with normal image-taking results, whereby the presence or absence of abnormality is determined. In such an inspection method, it is required to illuminate or light up uniformly the image-taking site of the CCD camera with a lighting apparatus, and a light guide is used as a type of the lighting apparatus.

The above light guide is a lighting apparatus which is obtained by bundling various optical fibers, and wherein the basal end portion of the bundle is used as a light-receiving portion, a light beam emitted from a light source is allowed to enter thereinto, the front end portion of the optical fibers as a light-irradiating portion is located toward a subject to be inspected, and a light beams from the front end portion of the optical fibers are irradiated over the subject to be inspected. In a production line using the inspection method utilizing the image-taking with the CCD camera, when defects have occurred in the lighting apparatus and inspection becomes impossible, the production line must be stopped.

As the light source for the light guide, halogen lamps are generally used. However, halogen lamps have a short lifetime of about 200 to 1,000 hours, and remarkable individual differences in the lifetime are observed. Accordingly, in the production line of e.g. semiconductors for which a few hundred light guides are used, there is a problem that operators are required to always monitor the production line so as to instantly change the burnt out lamp, to prevent the stoppage of the production line. Further, in a case where the lighting is switched on and off frequently during the inspection, the lifetime of the lamp of the halogen light source is remarkably lowered.

Further, in general, in the production line of e.g. semiconductors, the space in which the inspection apparatus is installed is limited. The installation space for the light guide using a halogen lamp is required to be large and this apparatus can not be installed in a narrow space.

In order to solve such problems, JP-A-11-219608 filed by the present inventors, proposes a light source of illumination utilizing a light-emitting diode. Since the light-emitting diode has a long lifetime and replacement of lamp is no longer required, it is possible to proceed with labor saving or improvement of working efficiency by the production line. However, since the light emitted from a single light-emitting diode is faint, it can not be used as itself as the light source of illumination. Accordingly, in JP-A-11-219608, light beams of light-emitting diodes are collected with a light-condensing member to obtain sufficient light for lighting.

Namely, a structure is used wherein light-emitting portions of plural light-emitting diodes are supported by a board so that the diodes face the same face side; a truncated light-condensing member made of a light-transmittable material is provided at the light-emitting portions so that an expanded bottom surface of the member is in contact with the light-emitting portions; and light beams emitted from the plural light-emitting diodes are collected to obtain sufficient luminosity for illumination.

However, in the techniques disclosed in JP-A-11-219608, there are problems that it takes time to manufacture and process the truncated transparent member as the light-condensing member, whereby the production cost is high, and that the transparent member is relatively long, whereby the apparatus can not be made compact.

Further, since the quantity of light of the light-emitting diode is faint as compared with the halogen lamp, a lot of diodes are required to obtain sufficient quantity of light for illumination necessary for the inspection. Accordingly, there is also a problem that if various light-emitting diodes are disposed on one single board, the board itself becomes large and the apparatus can not be made compact.

Accordingly, it is an object of the present invention, at least in its preferred forms, to provide a light source of illumination for a light guide which has a long lifetime and for which replacement of lamps is not required, and which can be produced at a relatively low cost and the illumination can be switched on and off in use without problems. It is another object of the present invention, at least in its preferred forms, to provide a light source of illumination for a light guide by which the entire apparatus can be made small and located in a narrow space for installation, whereby the space for installation can be effectively used and sufficient quantity of light necessary for inspection can be obtained.

Thus, according to a first aspect of the present invention there is provided a light source of illumination for a light guide which comprises a plurality of light-emitting diodes supported by a board and arranged such that light-emitting portions of the diodes face the same side; a concave mirror for reflecting and collecting light beams emitted by the light-emitting diodes; and an optical connector having an optical fiber cable connected thereto, for introducing the light collected by the concave mirror; wherein the concave mirror is located at a position opposite to the light-emitting diodes, and the optical connector is located at a focal point of the concave mirror.

According to the first aspect of the present invention, the light beams emitted by the plural light-emitting diodes, are reflected by the concave mirror and collected at the position at which the optical connector is located, whereby it is possible to efficiently introduce the light into the optical fiber cable of the light guide and obtain sufficient quantity of light.

Further, since the light-emitting diodes usually have a long lifetime and replacement thereof is hardly required, labor-saving and improvement of working efficiency can be made in the production line. Moreover, even if the light-emitting diodes are frequently switched on and off in use,the lifetime may not be reduced. The color tone of the light-emitting diodes can be selected depending upon the purpose, whereby the precision of inspection or the like can be improved.

Furthermore, since the concave mirror used as the light-collecting means preferably has a simple structure, the production costs can be kept low and weight saving can be made. Since the light beams emitted from the light-emitting diode are reflected by the concave mirror and collected at the light-emitting diode side, the entire apparatus can be made compact as compared with the case where the light-collecting member is located in front of the light-emitting diode and collection of light beams is made at the further frontward position of the light-collecting member.

In a preferred embodiment of the first aspect of the present invention, a light-delivering hole is formed at the center of the board, and the light-emitting diodes are annularly arranged surrounding the light-delivering hole, and wherein the light beams reflected by the concave mirror are output to the optical connector through the light-delivering hole.

According to the above embodiment, light beams are transmitted to the optical connector through the light-delivering hole formed at the center of the board, whereby the board, concave mirror and optical connector can be coaxially located and the apparatus can be made compact.

In another preferred embodiment of the first aspect of the present invention, a hole is formed at the center of the concave mirror, another board is provided at the back face side of the concave mirror, another group of light-emitting diodes is supported by and arranged on the other board, and the light beams emitted from the other group of light-emitting diodes are directly output to the optical connector through the light-delivering hole of the board.

According to the above embodiment, by directly outputting the light beams emitted by the other group of light-emitting diodes disposed at the back face side of the concave mirror to the optical connector through the light-delivering hole of the board, it is possible to supplement the dark portion at the center of the output light obtained by collecting the light beams emitted from the annularly arranged light-emitting diodes, whereby an output light having a uniform luminance in the radial direction can be obtained.

In a further preferred embodiment of the first aspect of the present invention, the concave mirror is located slantwise relative to the optical axis of light beams emitted from the light-emitting diodes located opposite to the concave mirror, the light beams reflected by the concave mirror are collected at sideward point of the board located opposite to the concave mirror and the optical connector is located at the sideward point.

According to the above embodiment, since the optical connector is located at the sideward point of the board, it is not required to form a light-delivering hole on the board. Accordingly, it is possible to locate the light-emitting diodes on the entire face of the board, and obtain an output light having a uniform luminance in the radial direction. Further, this embodiment is suitable for the case where the optical connector is required to be located slantwise due to the conditions such as the site on which the light source is installed.

In a still further preferred embodiment of the first aspect of the present invention, directions of the plural light-emitting diodes supported by the first mentioned board and/or the other board are adjusted so that the light beams emitted from the plural light-emitting diodes can be collected at a predetermined angle.

According to the above embodiment, it is possible to collect the light beams emitted from the light-emitting diodes at the initial stage and locate the concave mirror at a further closed position. Further, even in a case where a hole is formed at the center of the concave mirror and the light beams of the group of light-emitting diodes installed at the back face side of the concave mirror is output through this hole, by adjusting the directions of the light-emitting diodes so that the light beams emitted from the light-emitting diodes are collected at a predetermined angle, it is possible to enter the light efficiently into the optical connector.

In another embodiment of the first aspect of the present invention, the concave mirror has a non-circular shape.

According to this embodiment, since the concave mirror has a non-circular shape, the entire body of casing of the light source of illumination for a light guide can be made rectangular or oblong, it is possible to shorten the width direction of installation space, make the apparatus more compact, install the apparatus even in a narrow inspection space, and the like, whereby the installation space can be fully effectively used depending upon the shape of casing.

In a further embodiment of the first aspect of the present invention, the concave mirror has a shape obtained by cutting a circle along parallel straight lines each connecting opposite points on the circumference of the circle.

According to this embodiment, the shape of the concave mirror can be formed in a rectangular or oblong shape or the like depending upon the shape of the casing, whereby the installation space can be fully effectively used depending upon the shape of the casing. Further, since the concave mirror may be obtained by a method in which both side portions of a circle are cut away, it is possible to commonise the production steps with those of usual circular concave mirrors and reduce the production cost of the concave mirror.

In a still further embodiment of the first aspect of the present invention, the light-emitting diodes are arranged in plural steps on the board.

According to this embodiment, since the plural light-emitting diodes are arranged in at least two steps in a vertical direction or the like, it is possible to provide a large number of light-emitting diodes on the same board area, and increase the quantity of light by increasing the density of the arranged light-emitting diodes while keeping the apparatus small.

According to a second aspect of the present invention there is provided a light source of illumination for a light guide, which comprises: at least two light source units, each unit comprising a plurality of light-emitting diodes supported by a board and arranged such that light-emitting portions of the diodes face the same side, and a concave mirror for reflecting and collecting light beams emitted by the light-emitting diodes; a polyhedral reflection mirror which reflects light beams reflected by the respective concave mirrors of the at least two light source units and collects the light beams at one portion; and an optical connector having an optical fiber cable connected thereto, which is located at a position where the light is collected by the polyhedral reflection mirror.

According to the second aspect of the present invention, the light beams emitted from the plural light-emitting diodes of the reppective light source units are reflected by the concave mirror, and then reflected again by the polyhedral reflection mirror and collected at the optical connector, whereby it is possible to introduce the light efficiently into the optical fiber cable for the light guide connected to the optical connector and obtain sufficient quantity of light.

Further, since the light-emitting diodes usually have a long lifetime and replacement thereof is hardly required, labor-saving and improvement of working efficiency can be made in the production line. Moreover, even if the light-emitting diodes are frequently switched on and off in use, the lifetime may not be reduced. The color tone of the light-emitting diodes can be selected depending upon the purpose, whereby the precision of inspection or the like can be improved.

Furthermore, since the concave mirror used as the light-collecting means preferably has a simple structure, the production cost can be kept low and weight saving can be made. Since the light beams collected by the at least two light source units are collected or concentrated at one portion by the polyhedral reflection mirror, the quantity of light can be increased.

In a preferred embodiment of the second aspect of the present invention, a light-delivering hole is formed at the center of the board, and the light-emitting diodes are annularly arranged surrounding the light-delivering hole, wherein the light beams reflected by the concave mirror are irradiated on the polyhedral reflection mirror through the light-delivering hole.

According to the above embodiment, light beams are irradiated on the polyhedral reflection mirror through the light-delivering hole formed at the center of the board, whereby the board, concave mirror and polyhedral reflection mirror can be coaxially located and the apparatus can be made compact.

In another preferred embodiment of the second aspect of the present invention, a hole is formed at the center of the concave mirror, another board is provided at the back face side of the concave mirror, another group of light-emitting diodes is supported by and arranged on this other board, and the light beams emitted from the other group of light-emitting diodes are directly irradiated on the polyhedral reflection mirror through the light-delivering hole of the board.

According to the above embodiment, by irradiating the light beams emitted by the other group of the light-emitting diodes disposed at the back face side of the concave mirror on the polyhedral reflection mirror through the light-delivering hole of the board, it is possible to supplement the dark portion at the center of the output light obtained by collecting the light beams emitted from the annularly arranged light-emitting diodes, whereby an output light having a uniform luminance in the radial direction can be obtained.

In a still further embodiment of the second aspect of the present invention, the light-emitting diodes are arranged in plural steps on the board.

According to this embodiment, since the plural light-emitting diodes are arranged in at least two steps in a preferably vertical direction on the board, it is possible to provide a large number of light-emitting diodes on the same board area, and increase the quantity of light by increasing the density of the arranged light-emitting diodes while keeping the apparatus small.

In a further embodiment of the second aspect of the present invention, the concave mirror has a shape obtained by cutting a circle along parallel straight lines each connecting opposite points on the circumference of the circle.

According to this embodiment, the shape of the concave mirror can be formed in a rectangular or oblong shape or the like depending upon the shape of the casing, whereby the installation space can be fully effectively used depending upon the shape of the casing. Further, since the concave mirror may be obtained by a method in which both side portions of a circle are cut out of, for example, a circular concave mirror, it is possible to commonise the production steps with those of usual circular concave mirrors and reduce the production cost of the concave mirror.

In a still further embodiment of the second aspect of the present invention, respective faces of the polyhedral reflection mirror are constituted by a concave curved surface.

According to the above embodiment, when the light flux collected from the respective light source units is reflected and turned by the polyhedral reflection mirror, it becomes possible to further collect or condense the light flux by the concave curved surface, whereby the light beams can be efficiently collected.

Preferred embodiments of the invention will now be described by way of example only and with reference to the accompanying drawings, in which:
Fig.1 is a perspective view showing a state of the first embodiment of a light source of illumination for a light guide according to the present invention, wherein a part of a casing is cut away.
Fig.2 is a front view of the light source of illumination.
Fig.3 is a rear view of the light source of illumination.
Fig.4 is a front view of a first board in the light source of illumination.
Fig.5 is a front view of a second board in the light source of illumination.
Fig.6 is a side view of the second board in the light source of illumination.
Fig.7 is a side view wherein a main part of the light source of illumination is enlarged.
Fig.8 is a partially cutaway side view showing a state wherein a light guide is connected to the light source of illumination.
Fig.9 is a side view showing the second embodiment of a light source of illumination for a light guide according to the present invention, wherein a main part is enlarged.
Fig.10 is a side view showing the third embodiment of a light source of illumination for a light guide according to the present invention, wherein a main part is enlarged.
Fig.11 is a perspective view showing the fourth embodiment of a light source of illumination for a light guide according to the present invention, wherein a part of a casing is cut away.
Fig.12 is a front view of a first board in the light source of illumination.
Fig.13 is a front view of a concave mirror in the light source of illumination.
Fig.14 is a side view wherein a main part of the light source of illumination is enlarged.
Fig.15 is a partially cutaway side view showing a state wherein a light guide is connected to the light source of illumination.
Fig.16 is a plane view showing the fifth embodiment of a light source of illumination for a light guide according to the present invention.
Fig.17 is a plane view showing a main part of a light source unit in the light source of illumination.
Fig.18 is a plane view showing the sixth embodiment of a light source of illumination for a light guide according to the present invention.
Fig.19 is a perspective view showing another embodiment of a reflection mirror in the light source of illumination for a light guide according to the present invention.
Fig.20 is a perspective view showing a still another embodiment of a reflection mirror in the light source of illumination for a light guide according to the present invention.

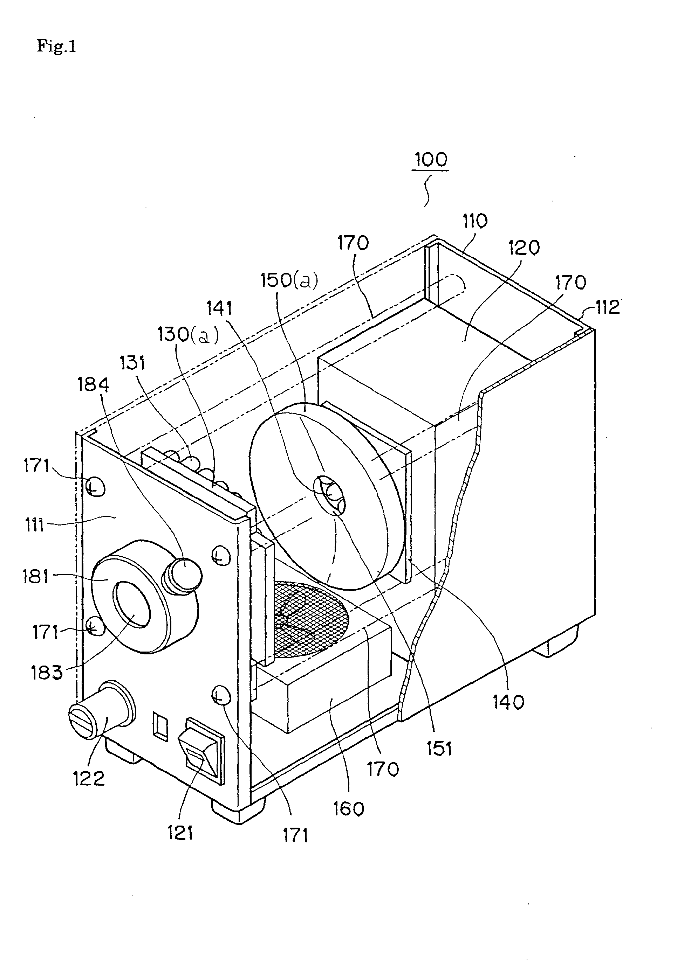

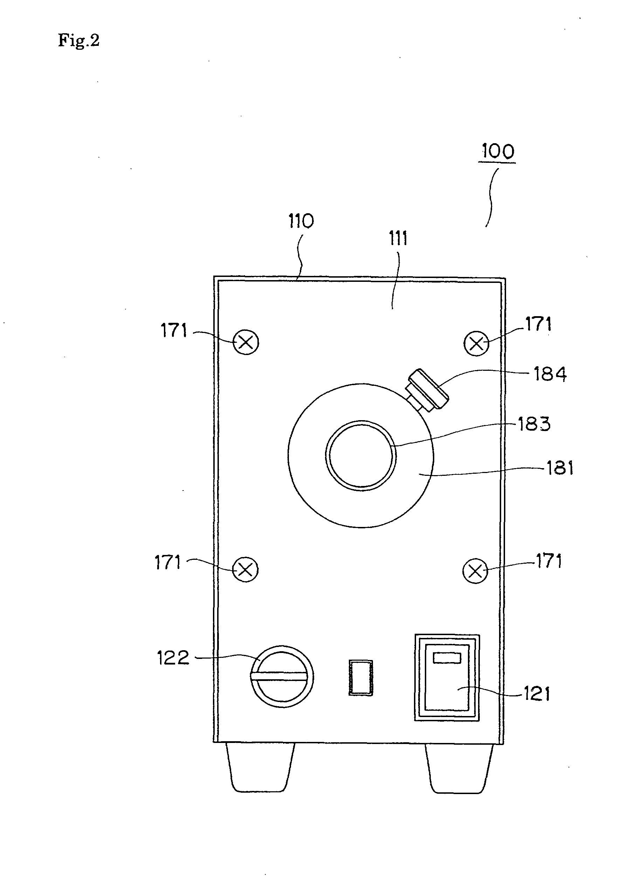

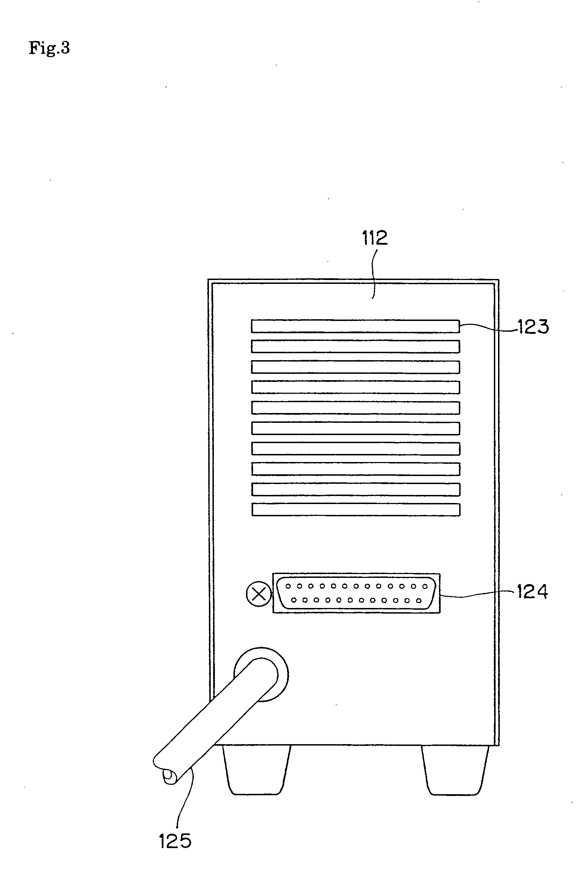

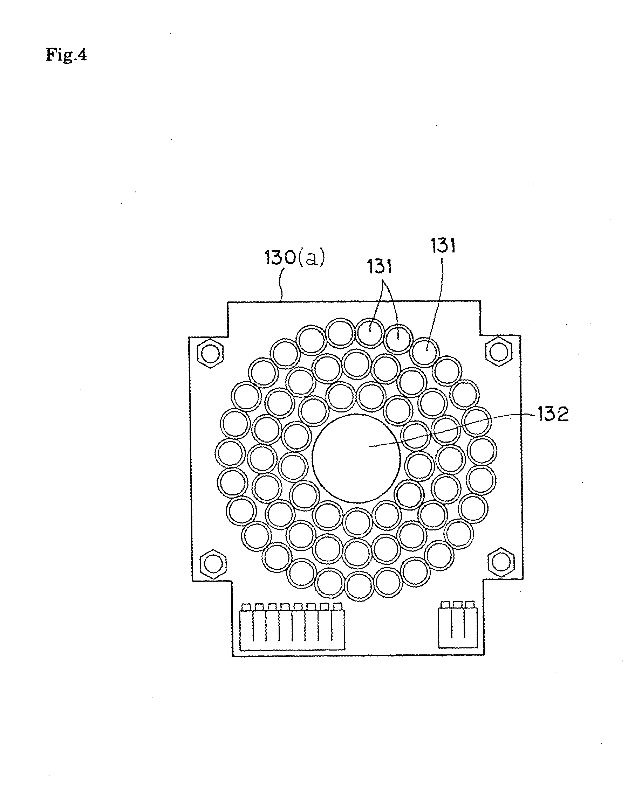

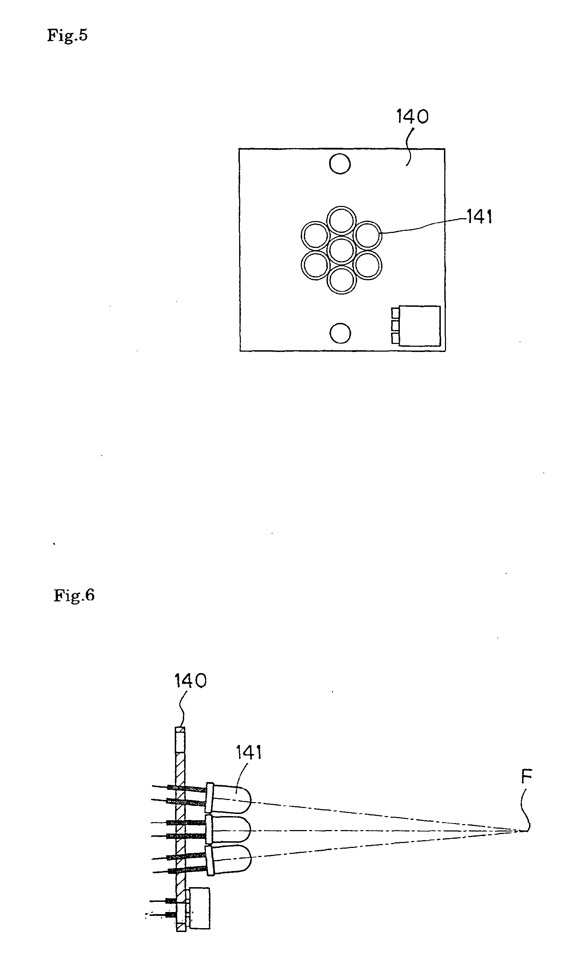

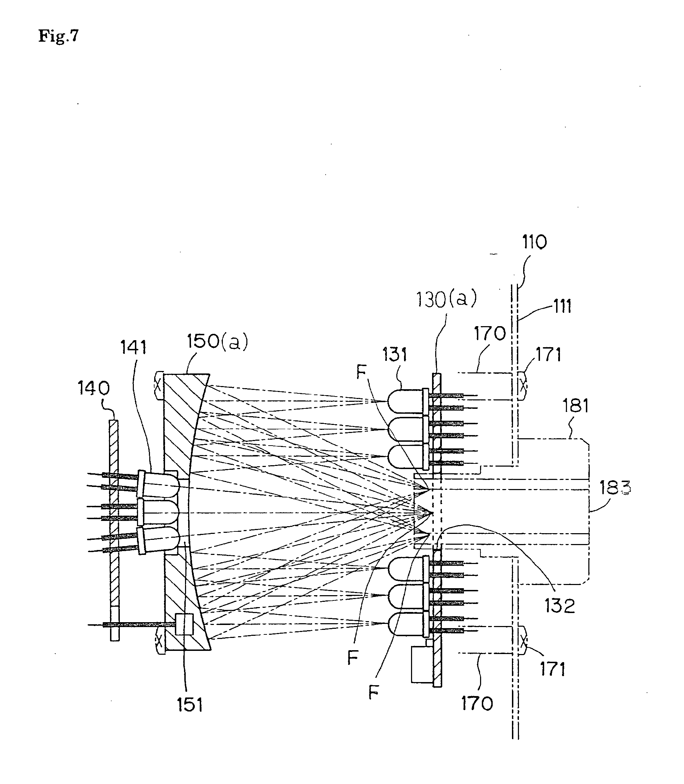

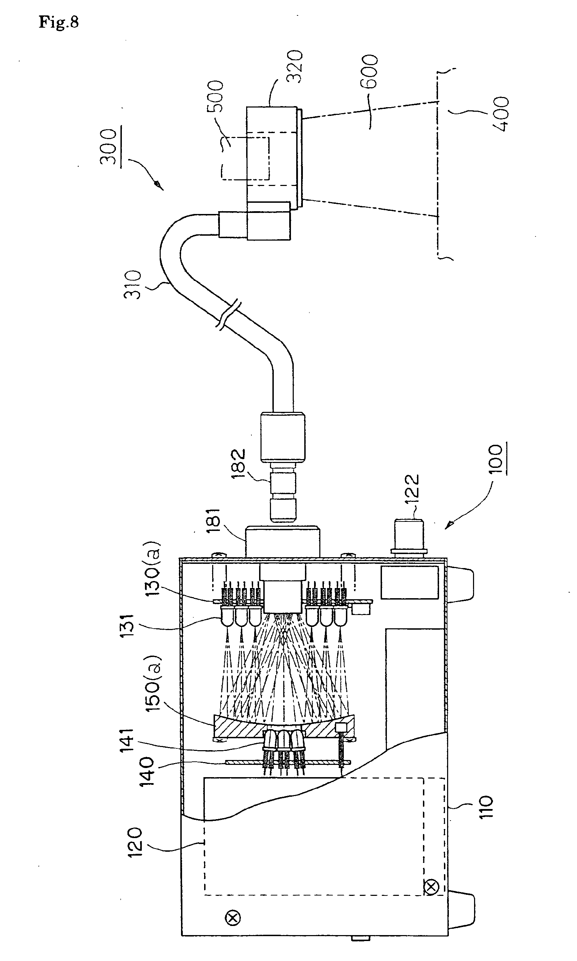

Figs.1 to 8 show an embodiment of a light source of illumination for a light guide according to the present invention. Fig.1 is a perspective view showing a state wherein a part of a casing is cut away. Fig.2 is a front view of the light source of illumination. Fig.3 is a rear view of the light source of illumination. Fig.4 is a front view of a first board. Fig.5 is a front view of a second board. Fig.6 is a side view of the second board. Fig.7 is a side view wherein a main part of the light source of illumination is enlarged. Fig.8 is a partially cutaway side view showing a state wherein a light guide is connected to the light source of illumination.

As shown in Fig.1, a light source of illumination 100 of the present invention has a box-like casing 110. A power supply circuit 120 is disposed at the rearward in the casing 110, and a cooling fan 160 is disposed at the forward lower portion in the casing with the fan face located upwardly. Further, in the casing 110, at a front face 111 and a back face 112 of the casing 110, rod-like frames 170 are fixed with screws 171.

At the inside of the front face 111 of the casing 110, a first board 130(a) supporting a first light-emitting diode group 131 is disposed such that the light-emitting portions of the first light-emitting diode group 131 face the back face 112 side, and the first light-emitting diode group 131 is supported by and fixed on the frames 170 via brackets not shown. As shown in Fig.4, the first board 130(a) has a circular light-delivering hole 132 at the central portion, and the first light-emitting diode groups 131 are annularly arranged surrounding the light-delivering hole 132.

Further, a concave mirror 150(a) having a hole 151 at the central portion is disposed opposite to the first light-emitting diode group 131 so that the concave face faces the front face 111 side, and the concave mirror is supported by and fixed on the frames 170 via brackets not shown. As the concave mirror 150(a), ones obtained by abrasion processing of a metal such as brass or ones obtained by molding glass or a synthetic resin and depositing a metal on its surface, may be employed.

Furthermore, a second board 140 supporting second light-emitting diode groups 141 is connected to and supported by the back face side of the concave mirror 150(a) such that the light-emitting portions of the second light-emitting diode groups 141 face the front face 111 side. As shown in Fig.5, the second light-emitting diode groups 141 are arranged in a circular form at the central portion of the second board 140. Further, as shown in Fig.6, the second light-emitting diode groups 141 are arranged slantwise so that the emitted light beams are collected or focused on the focal point F of the concave mirror 150 (a) .

As shown in Fig.7, the front end portion of the second light-emitting diode groups 141 is inserted into a hole 151 at the center of the concave mirror 150(a), and the light beams emitted from the second light-emitting diode groups 141 pass through the hole 151 and are collected on the focal point F of the concave mirror 150(a), as indicated by the imaginary line in Fig.7.

Further, into the light-delivering hole 132, is inserted a basal end portion of a cylindrical optical connector 181 which penetrates through the front face 111 and is inserted inwardly. The basal end portion of the cylindrical optical connector 181 is disposed at the front face 111 of the casing 110. The optical connector 181 has an insertion hole 183 into which an optical plug 182 of a light guide 300 as shown in Fig.8 is inserted.

As shown in Figs.1 and 2, at the front face 111 of the casing 110, a power supply switch 121 and a selector of power output 122 are provided, and further the optical connector 181 is provided. At the side face of the optical connector 181, a fixing screw 184 is screwed so as to fix the optical plug 182 inserted into the insertion hole 183 and prevent unwanted detachment.

As shown in Fig.3, at the upper portion of the back face 112 of the casing 110, a vent hole 123 is formed to discharge the heat generated by the electric supply circuit 120 or the light-emitting diode groups 131, 141 out of the casing 110. Further, at the central portion of the back face 112, a connector 124 for connecting it to a computer or the like is provided, and from the lower portion of the casing, an electric wire 125 for supplying electricity to the electric supply circuit 120 from the outside, extends.

As shown in Fig.8, a light guide 300 has an optical fiber cable 310 obtained by bundling various optical fibers and covering them with a tube, an optical plug 182 provided at the basal end portion of this optical fiber cable 310, and an annular light-emitting portion 320 provided at the front end. At the center of the annular light-emitting portion 320, a CCD camera 500 is inserted and arranged to face a workpiece 400 to be inspected.

Next, the operation of the light source of illumination 100 will be explained. At first, the optical plug 182 provided at the basal end of the optical fiber cable 310 of the light guide 300 is inserted into the insertion hole 183 of the optical connector 181, and the fixing screw 184 is firmly tightened to secure the connection. The annular light-emitting portion 320 of the light guide 300 is arranged to face the workpiece 400 to be inspected, and the CCD camera 500 is inserted into a central opening of the annular light-emitting portion 320 so as to take image on the inspection spots of the workpiece 400. In order to successively conduct imaging or image-taking on workpieces conveyed in succession for inspection, the light guide 300 is transferred with a driving device not shown in accordance with an inspection process.

Then, when the power supply switch 121 of the light source of illumination 100 is switched on, a predetermined voltage is supplied from the power supply circuit 120 to the first light-emitting diode group 131 via the first board 130(a) , by which the first light-emitting diode group 131 emits light beams, and likewise, a predetermined voltage is supplied from the power supply circuit 120 to the second light-emitting diode group 141 via the second board 140, by which the second light-emitting diode group 141 emits light beams. The quantity of light may be controlled by the selector of power output 122 which is provided at the front face 111 of the casing 110. Further, the cooling fan 160 is operated so as to prevent overheat by heat evolution of the first light-emitting diode group 131 and the second light-emitting diode group 141, or the like.

As indicated by the imaginary line in Fig.7, the light beams emitted from the first light-emitting diode group 131 are reflected by the concave mirror 150(a) and collected on the focal point F. Here, since the first light-emitting diode group 131 is annularly arranged, the central portion of the output light collected on the focal point area tends to be darker than the peripheral portion thereof, only with the light beams of the first light-emitting diode group 131.

However, since the light beams emitted from the second light-emitting diode group 141 pass through the hole 151 of the concave mirror 150(a) and are directly collected on the central portion of the focal point area, irregularities of the output light of the first light-emitting diode group 131 can be supplemented, whereby the luminance of the output light collected on the focal point area becomes uniform in the radial direction.

The output light thus collected enters into the optical plug 182 provided at the basal end portion of the optical fiber cable 310 of the light guide 300, and is irradiated over the workpiece 400 to be inspected from the annular light-emitting portion 320 of the light guide 300 through the optical fiber cable 310. The inspection spots of the thus irradiated workpiece 400 are imaged by the CCD camera 500 for inspection.

As mentioned above, according to the light source of illumination 100, since the light beams of plural light-emitting diodes are collected by use of the concave mirror 150(a), it is possible to generate sufficiently luminous light for the inspection of the workpiece 400. Since the lifetime of the light-emitting diode is long, replacement or the like of lamps is not required, and labor saving in the production line can be realized and at the same time, the working efficiency can be improved. Further, by using the concave mirror 150(a), the first light-emitting diode group 131 can be located at the output light side, whereby the space in the apparatus can be efficiently utilized and the entire apparatus can be made compact.

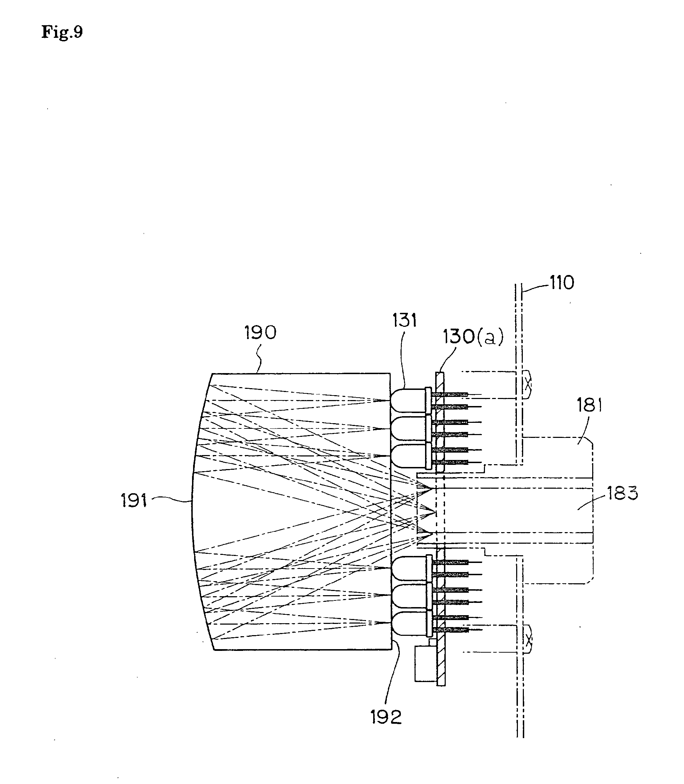

Fig.9 shows the second embodiment of a light source of illumination for a light guide according to the present invention, and is a side view wherein a main part of the light source of illumination is enlarged. In the following description of this embodiment, the same parts as in the previous embodiment are indicated by the same reference numerals and their explanations will be omitted.

As shown in Fig.9, in this light source of illumination, the light beams emitted from the first light-emitting diode group 131 enter into a transparent member 190. The transparent member 190 is made of a light-transmittable material such as glass or a transparent acrylic resin, and has a cylindrical shape as a whole and a convex curved surface formed at one end. On the surface of this convex curved surface, a metal film of e.g. gold, silver or aluminum is attached uniformly by deposition or the like to form a concave mirror 191. Further, the transparent member 190 is located such that a plane surface 192 of another end thereof is in contact with the light-emitting portion of the first light-emitting diode group 131.

In this light source of illumination, the light beams emitted from the first light-emitting diode group 131 enter through the plane surface 192 of the transparent member 190 and pass through the inside thereof, and then reflected by the concave mirror 191, pass through the inside of the transparent member 190 again, and are collected at the inside of the insertion hole 183 of the optical connector 181 inserted into the first board 130(a).

As mentioned above, the light beams emitted from the first light-emitting diode group 131 are introduced into the transparent member 190 and reflected by the concave mirror 191 formed at the end face of the transparent member 190, whereby the light can be introduced toward the concave mirror 191 while the loss of light due to the diffusion of light emitted from the light-emitting diode can be kept as low as possible, and the light-collecting efficiency can be improved.

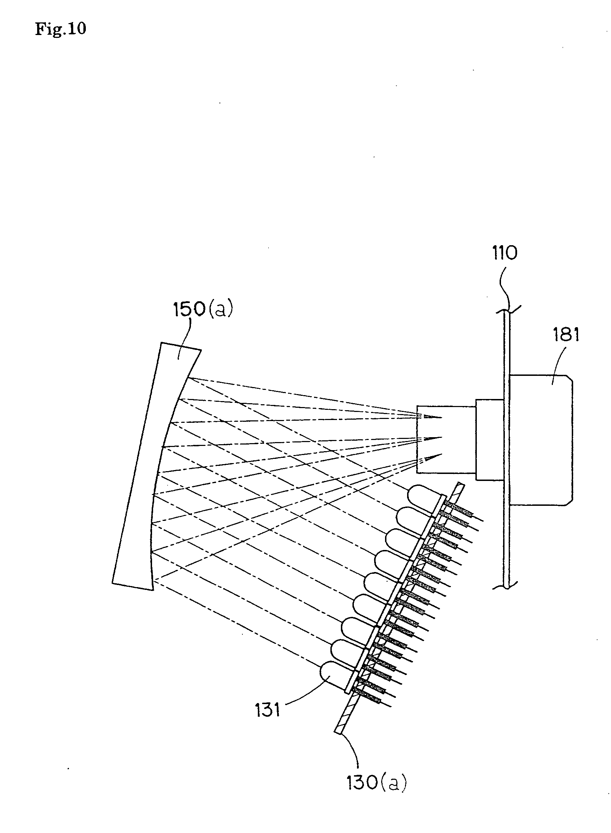

Fig.10 shows the third embodiment of a light source of illumination for a light guide according to the present invention, and is a side view wherein a main part of the light source of illumination is enlarged.

In this light source of illumination, the concave mirror 150 (a) is located slantwise relative to the optical axis of the light beams emitted by the first light-emitting diode group 131, and the light beams emitted from the first light-emitting diode group 131 are reflected by the concave mirror 150(a) and collected at a sideward point of the board 130(a) supporting the first light-emitting diode group 131. The optical connector 181 is located at the outside of the board 130(a) and at the position at which the concave mirror 150(a) focuses. Accordingly, on the board 130(a) , no hole is formed and the first light-emitting diode group 131 is circularly arranged without space.

According to the above light source of illumination, since there is no need to provide a light-transmittable portion at the center of the first light-emitting diode group 131, all elements of the first light-emitting diode group 131 can be arranged in a complete circular configuration. Accordingly, it is possible to generate a uniform and luminous output light from the optical connector without providing the second light-emitting diode group 141 in the previous embodiment. Further, this embodiment is preferred for the case where the optical connector 181 must be located at a slantwise angle due to the conditions of the site at which the light source is located.

The light source of illumination of the present invention may have a structure wherein the light source is preliminarily connected to a light guide to form a lighting apparatus in which the light source is supported by frames integrated with the light guide. In this case, the light source of illumination and the light guide are integrated, and these are transferred together depending upon the portion to be inspected. In such a structure, no repeated flexural stress or the like is exerted on the optical fiber cable of the light guide, whereby it is possible to prevent breaking or the like of the optical fiber cable by flex fatigue.

Further, by selecting the light-emitting diode of a predetermined color, lighting or illuminating beams of a color suitable for the purpose can be output. In this case, by arranging light-emitting diodes of three colors i.e. RGB alternately and making only the light-emitting diodes for the desired color to emit, it is possible to generate various colors by only one light source of illumination.

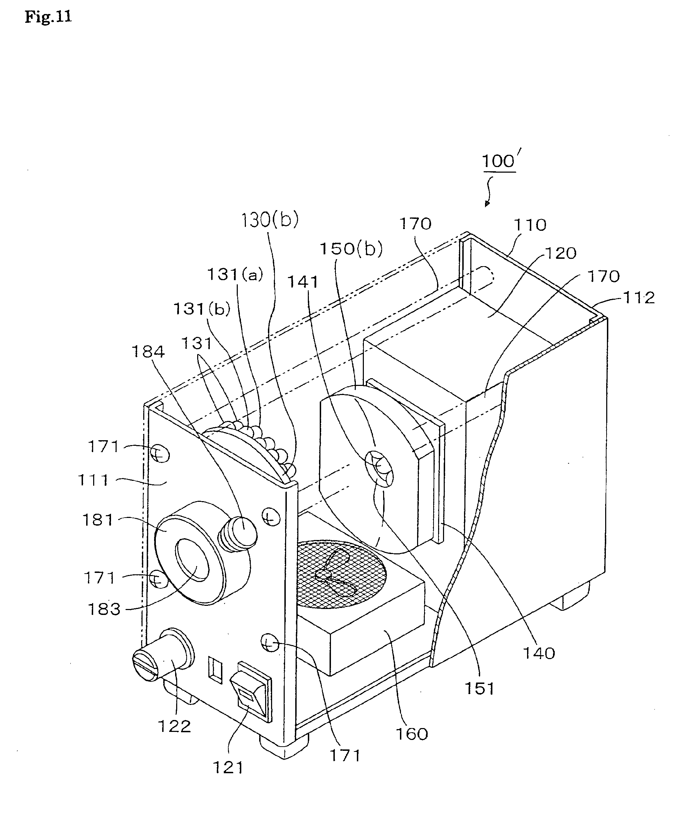

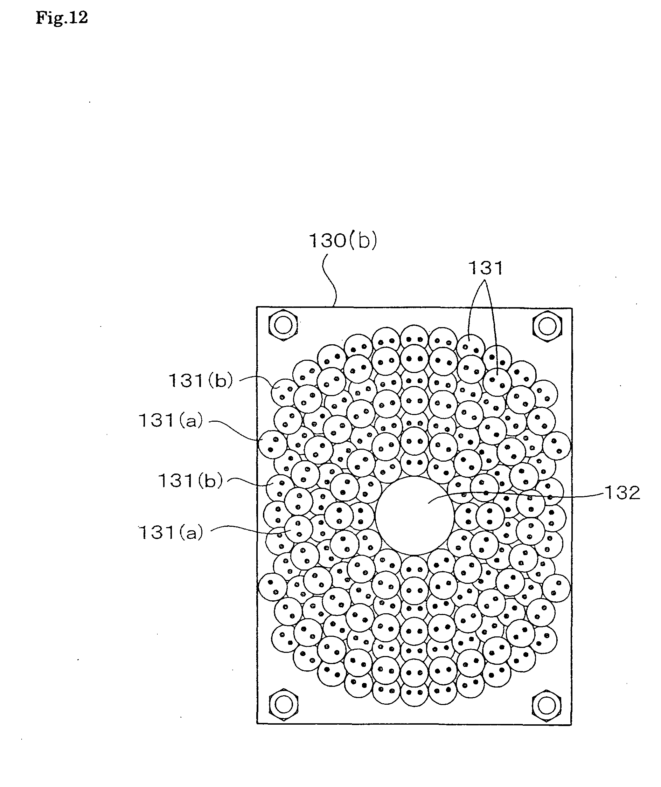

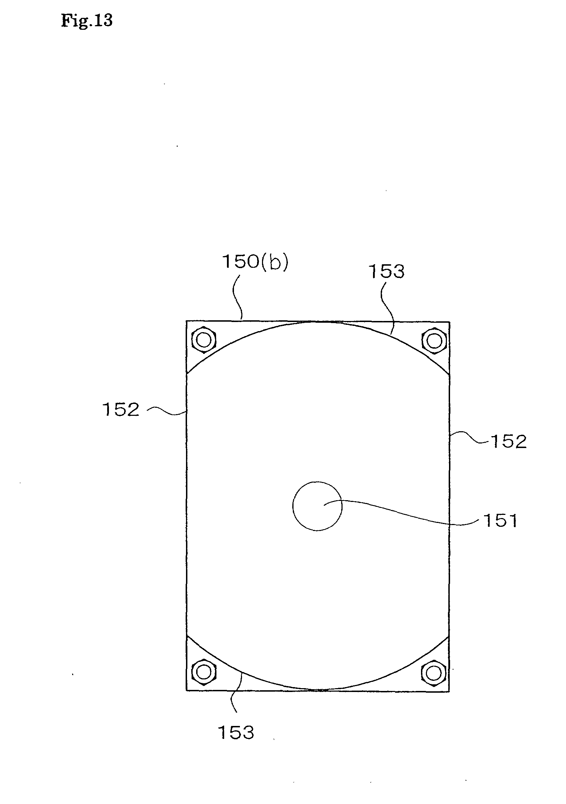

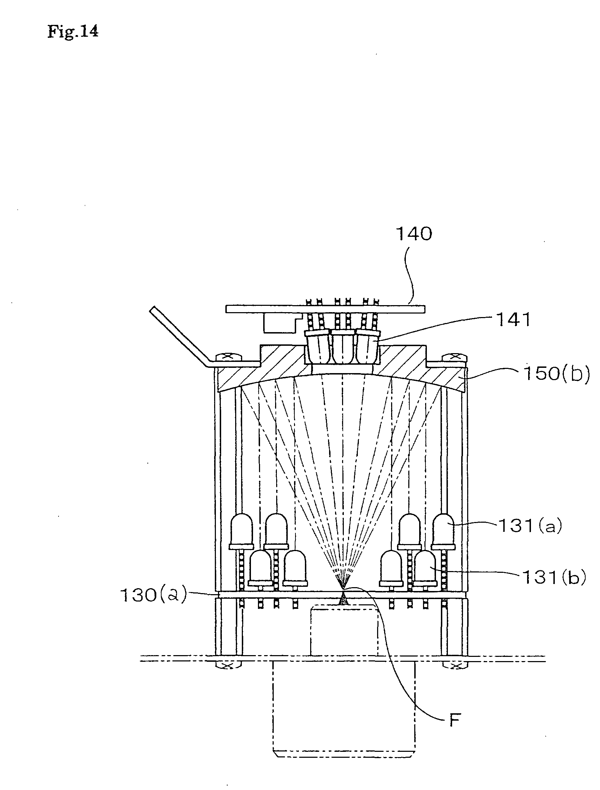

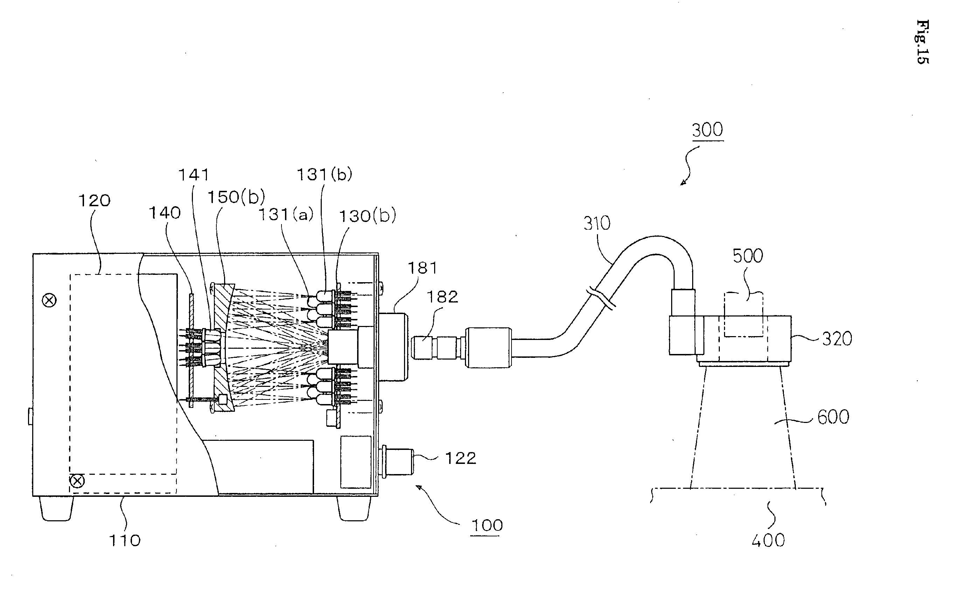

Figs.11 to 15 show the fourth embodiment of the light source of illumination for the light guide according to the present invention. Fig.11 is a perspective view wherein a part of a casing of the light source of illumination is cut away. Fig.12 is a front view of a first board. Fig.13 is a front view of a concave mirror. Fig.14 is a side view wherein a main part of the light source of illumination is enlarged. Fig.15 is a partially cutaway side view showing a state wherein a light guide is connected to the light source of illumination.

The light source of illumination 100' of the fourth embodiment is different from the first embodiment in that the light-emitting diode group 131 is arranged in two steps in the vertical direction on the surface of a board 130(b) as shown in Figs.11 and 12, and that a concave mirror 150(b) has a non-circular form and a configuration obtained by cutting a circle along parallel straight lines 152 each connecting opposite points on the circumference.

In the example as shown in Fig.12, 158 diodes of a light-emitting diode group 131 are alternately arranged in the upper and lower steps i.e. an upper step 131(a) and a lower step 131(b). The light-emitting diode group 131 is preferably arranged in at least two steps in the vertical direction on the surface of the board 130(b) as mentioned above. In this case, as a method for arrangement for increasing the number of light-emitting diodes on the same board area, it is preferred to arrange them in a zigzag form on the upper and lower steps and in a partially overlapping form as shown in Fig.14, whereby the density of arrangement of the light-emitting diodes is increased, resulting in increase of the quantity of light.

The shape of the concave mirror 150(b) is non-circular, and can be adjusted to the casing 110 taking the installation space into consideration. The shape is not particularly limited, and can be suitably adjusted to the shape of the casing 110, for example, a rectangular shape, an oval shape or an elliptical shape. The most preferred shape is, as shown in Fig.13, the shape obtained by cutting a circle along parallel straight lines 152 each connecting opposite points on the circumference 153. In this case, the concave mirror may be prepared by a method of preliminarily pressing into such a shape, a method of molding a resin, or a method of preparing a circular concave mirror in the first step and then cutting both edges thereof.

According to the fourth embodiment, as shown in Fig.13, since the concave mirror 150(b) has a shape obtained by cutting a circle along parallel straight lines each connecting opposite points on the circumference, it is possible to make the whole body shape of the casing 110 of the light source of illumination for the light guide into a rectangular or oblong shape; and since it becomes possible to narrow the installation space in the width direction, the apparatus can be made further compact and such an apparatus can be installed in a narrow inspection space.

Further, as shown in Figs.12 and 14, since the light-emitting diode group 131 is arranged in at least two steps in the vertical direction on the surface of the board 130(b), it becomes possible to arrange much more light-emitting diodes on the same board area and increase the density of arrangement, whereby the quantity of light can be increased while keeping the apparatus small-sized.

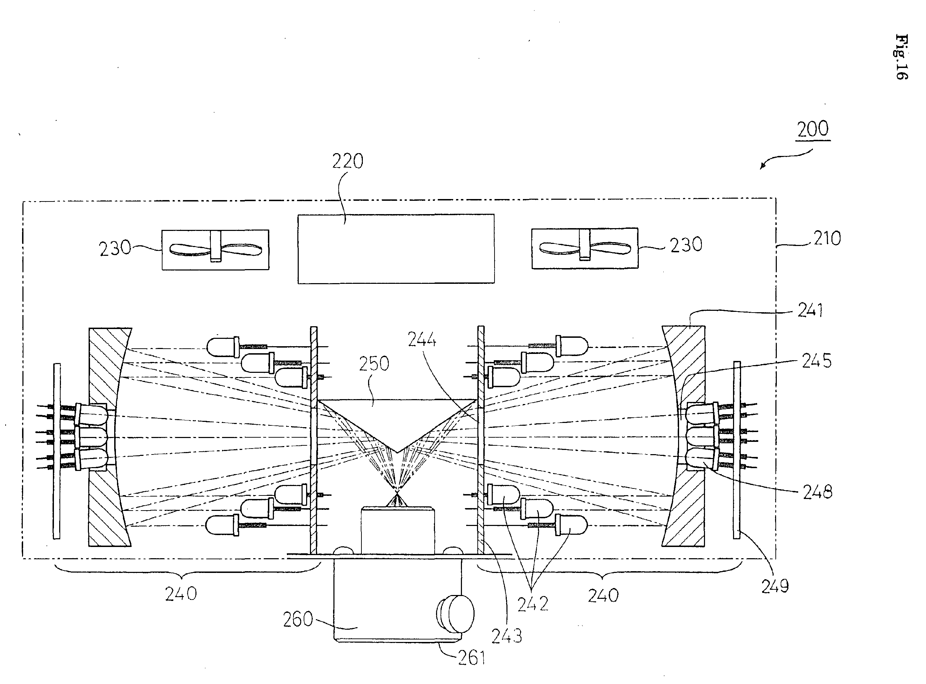

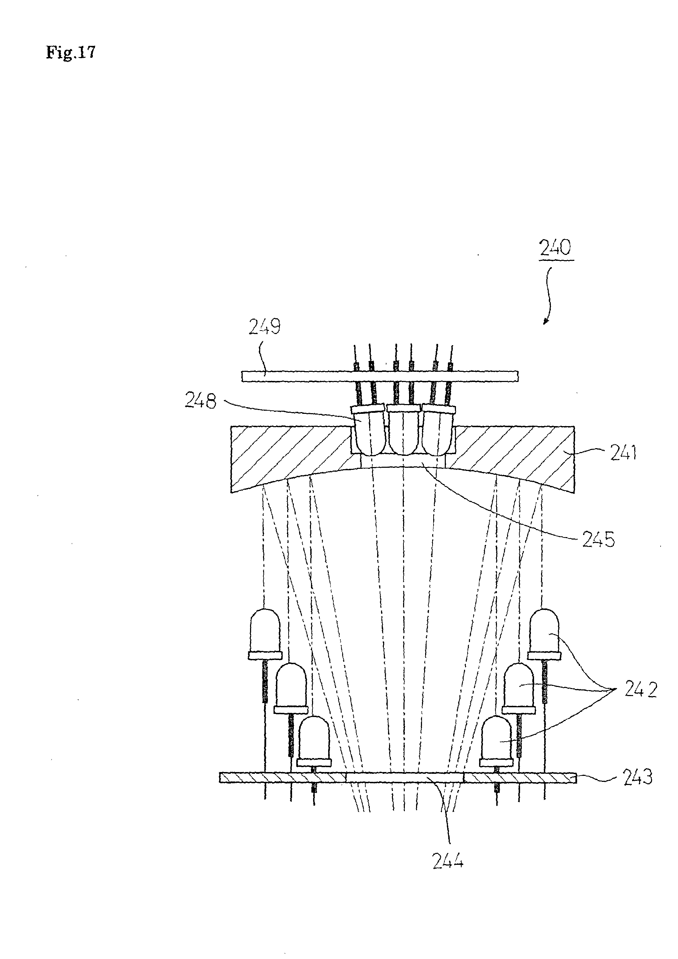

Figs.16 and 17 show the fifth embodiment of the light source of illumination of the present invention. Fig.16 is a plane view of a light source of illumination for a light guide according to this preferred embodiment of the present invention. Fig.17 is a plane view showing a main part of the light source unit.

As shown in Fig.16, a light source of illumination 200 has a box-like casing 210, and a power supply circuit 220 is provided inside the casing 210 and a cooling fan 230 is provided in each light source unit 240.

In the casing 210, two pairs of light source units 240 are arranged so that these surround a polyhedral reflection mirror 250 and the light beams from the light source units 240 are reflected by respective faces of the polyhedral reflection mirror 250. Further, the optical connector 260 is located at the position on which the light beams reflected or turned by the polyhedral reflection mirror 250 are substantially focused.

Here, in the light source unit 240 as shown in Figs.16 and 17, a concave mirror 241 is located at the position opposite to a first light-emitting diode group 242 supported by a first board 243. The first board 243 has a circular light-delivering hole 244 at the center, and the first light-emitting diode group 242 is arranged annularly surrounding the light-delivering hole 244. Here, the concave mirror 241 is equal to the concave mirror 150(b) of the fourth embodiment and has a configuration that a circle is cut along parallel straight lines each connecting points opposite to each other on the circumference.

The first light-emitting diode group 242 is preferably located in at least two steps in the vertical direction on the surface of the first board 243 . In an example as shown in Fig.17, they are arranged stepwise in three steps. In this case, it is preferred to arrange them so that respective steps partially overlap as shown in Fig.17, in order to increase the number of the light-emitting diodes on the same area, by which the density of arrangement of the light-emitting diodes can be increased and the quantity of light can be increased.

Further, a second board 249 supporting a second light-emitting diode group 248, is supported and connected to the back face side of the concave mirror 241 so that the second light-emitting part of the second light-emitting diode group 248 face the first light-emitting diode group 242.

As shown in Fig. 16, the front end portion of the second light-emitting diode group 248 is inserted into the central hole 245 of the concave mirror 241, and the light beams emitted from the second light-emitting diode group 248 are directly irradiated toward the polyhedral reflection mirror 250 through the hole 245, as indicated by the imaginary line in Fig.17.

The light beams collected from the respective light source units 240 are then reflected and turned by the polyhedral reflection mirror 250 and collected on one point. Here, the polyhedral reflection mirror 250 has several reflection faces corresponding to the number of the light source units 240, and in the example of Fig.16, has a shape of a triangular prism.

Here, as the polyhedral reflection mirror 250, ones obtained by polishing a metal such as aluminum or brass or ones obtained by molding glass or a synthetic resin and depositing thereon a metal such as aluminum, and the like are suitably used.

Further, at the position at which the light flux reflected by the polyhedral reflection mirror 250 is substantially collected, a basal end portion of the cylindrical optical connector 260 inserted through the casing 210 is disposed. The optical connector 260 has an insertion hole 261 for an optical fiber cable (not shown).

According to this embodiment, as indicated by the imaginary line of Fig.17, the light beams emitted from the first light-emitting diode group 242 are reflected by the concave mirror 241, and further reflected by the corresponding reflection faces of the polyhedral reflection mirror 250 and collected to a light-introducing portion of the optical connector 260. The light beams collected from the respective light source units 240 are further reflected and turned by the polyhedral reflection mirror 250 and collected on one point, whereby a quantity of light comparable to halogen lamps can easily be obtained.

Furthermore, by combining plural light source units, even if the number of light-emitting diodes increases, the concave mirror of each one can be kept small, whereby the degree of freedom of the configuration of the casing is increased and the installation space can be utilized as highly as possible. Further, since the concave mirror can always be manufactured with the same size and the whole quantity of light can be determined by the number of the light source units, the production parts can be commonized and the production costs can be reduced.

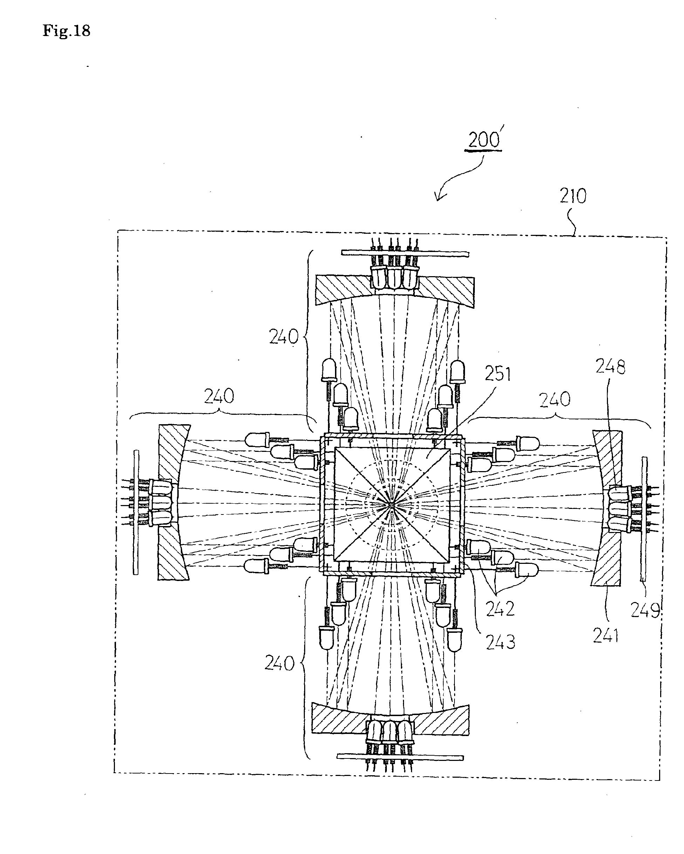

Fig.18 shows the sixth embodiment of the light source of illumination for the light guide according to the present invention. The substantially same parts as in the fifth embodiment are indicated by the same reference numerals, and explanation thereof is omitted.

As shown in Fig.18, in a light source of illumination for a light guide 200', four pairs of light source units 240 are arranged in the casing 210 surrounding the polyhedral reflection mirror 251, and the light beams from the respective light source 240 are irradiated on the corresponding reflection faces of the polyhedral reflection mirror 251. As mentioned above, the difference from the previous embodiment resides in a point that four pairs of the light source units 240 are used and the configuration of the reflection mirror 251 is a quadrangular pyramid shape.

By such a structure, the quantity of light is increased to about 2 times as compared with the fifth embodiment. The quantity of light can be freely increased by the combination of the reflection mirror and the number of the light source units as mentioned above. Further, by combining plural light source units, even if the number of the light-emitting diodes increases, the concave mirror for each one can be kept small, whereby the degree of freedom of the casing can be increased and the installation space can be utilized as highly as possible. Further, since the concave mirror can always be manufactured with the same size and the whole quantity of light can be determined by the number of the light source units, the production step is simple and the light source units can be commonized, leading to reduction of production costs.

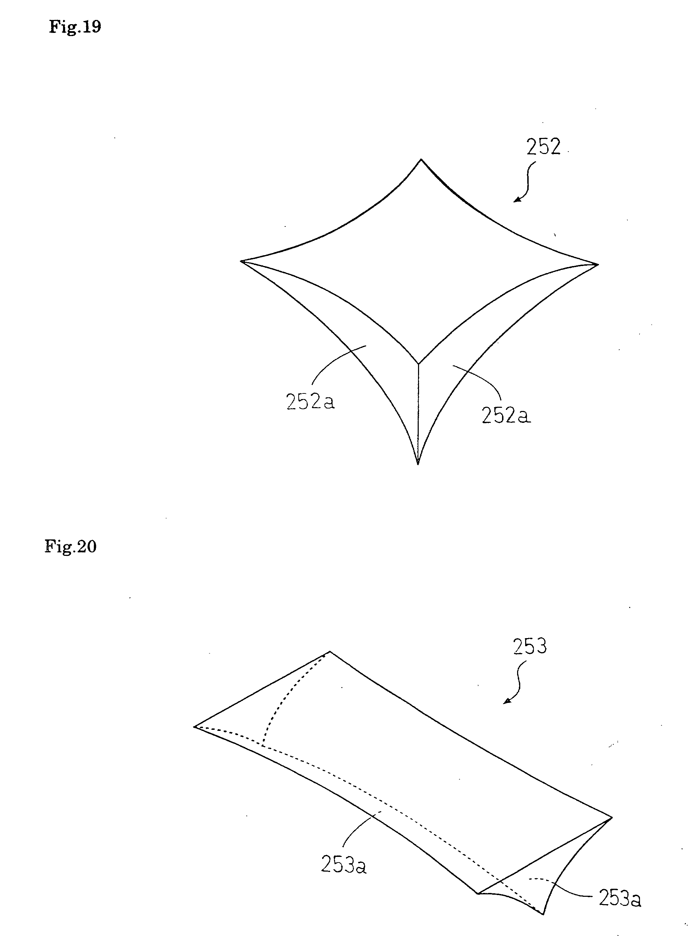

On the other hand, Figs.19 and 20 show another embodiment of the polyhedral reflection mirror of the present invention. This embodiment is different from the previous one in that the surfaces of the polyhedral reflection mirrors 252, 253 have concave curved faces 252a, 253a, respectively. In general, the light source of the light-emitting diode have a spread ranging from about 8 degree to about 25 degree depending upon the color of the light source. Accordingly, by forming the respective faces of the polyhedral reflection mirror into a concave curved face, it is possible to not only simply reflect and turn the light flux from the respective light source units 240, but also collect the reflected light beams again, whereby the light-collecting efficiency of the light beams entered into the optical fibers can be increased.

As described above, according to the present invention, at least in its preferred forms, it is possible to produce an apparatus having a long lifetime, for which no replacement of lamps is required, at a relatively low cost, and to obtain sufficient quantity of light by a small-sized apparatus. Further, the shape of the casing can be changed flexibly depending upon the installation space. Moreover, it is possible to provide a light source of illumination for a light guide, which is small in size and provide a quantity of light sufficient for inspection.

## Claims

1. A light source of illumination (100;100') for a light guide (300) which comprises a plurality of light-emitting diodes (131) supported by a board (130(a);130(b)) and arranged such that light-emitting portions of the diodes face the same side; a concave mirror (150(a);191;150(b)) for reflecting and collecting light beams emitted by the light-emitting diodes; and an optical connector (181) having an optical fiber cable (310) connected thereto, for introducing the light collected by the concave mirror; wherein the concave mirror is located at a position opposite to the light-emitting diodes, and the optical connector is located at a focal point of the concave mirror.

2. A light source of illumination (100;100') for a light guide as claimed in claim 1, wherein a light-delivering hole (132) is formed at the center of the board (130(a); 130(b)), and the light-emitting diodes (131) are annularly arranged surrounding the light-delivering hole, and wherein the light beams reflected by the concave mirror (150(a);191;150(b)) are output to the optical connector (181) through the light-delivering hole.

3. A light source of illumination (100;100') for a light guide (300) as claimed in claim 2, wherein a hole (151) is formed at the center of the concave mirror (150(a); 150(b)), another board (140) is provided at the back face side of the concave mirror, another group of light-emitting diodes (141) is supported by and arranged on the other board (140), and the light beams emitted from the other group of light-emitting diodes (141) are directly output to the optical connector (181) through the light-delivering hole (132) of the board (130(a);130(b)).

4. A light source of illumination (100) for a light guide (300) as claimed in claim 1, wherein the concave mirror (150(a)) is located slantwise relative to the optical axis of light beams emitted from the light-emitting diodes (131) located opposite to the concave mirror, the light beams reflected by the concave mirror are collected at a sideward point of the board (130(a)) located opposite to the concave mirror and the optical connector (181) is located at the sideward point.

5. A light source of illumination (100;100') for a light guide (300) as claimed in any preceding claim, wherein directions of the plural light-emitting diodes (131,141) supported by the first mentioned board (130(a);130(b))and/or the other board (140) are adjusted so that the light beams emitted from the plural light-emitting diodes can be collected at a predetermined angle.

6. A light source of illumination (100') for a light guide (300) as claimed in any preceding claim, wherein the concave mirror (150(b)) has a non-circular shape.

7. A light source of illumination (100') for a light guide (300) as claimed in any of claims 1 to 5, wherein the concave mirror has a shape obtained by cutting a circle along parallel straight lines (152) each connecting opposite points on the circumference (153) of the circle.

8. A light source of illumination (100') for a light guide (300) as claimed in any preceding claim, wherein the light-emitting diodes (131) are arranged in plural steps on the board (130(b)).

9. A light source of illumination (200;200') for a light guide, which comprises: at least two light source units (240), each unit comprising a plurality of light-emitting diodes (242) supported by a board (243) and arranged such that light-emitting portions of the diodes face the same side, and a concave mirror (241) for reflecting and collecting light beams emitted by the light-emitting diodes; a polyhedral reflection mirror (250;251) which reflects light beams reflected by the respective concave mirrors of the at least two light source units and collects the light beams at one portion; and
an optical connector (260) having an optical fiber cable connected thereto, which is located at a position where the light is collected by the polyhedral reflection mirror.

10. A light source of illumination (200;200') for a light guide as claimed in claim 9, wherein a light-delivering hole (244) is formed at the center of the board (243), and the light-emitting diodes (242) are annularly arranged surrounding the light-delivering hole, and wherein the light beams reflected by the concave mirror (241) are irradiated on the polyhedral reflection mirror (250;251) through the light-delivering hole.

11. A light source of illumination (200;200') for a light guide as claimed in claim 10, wherein a hole (245) is formed at the center of the concave mirror (241), another board (249) is provided at the back face side of the concave mirror, another group of light-emitting diodes (248) is supported by and arranged on this other board, and the light beams emitted from the other group of light-emitting diodes (248) are directly irradiated on the polyhedral reflection mirror (250;251) through the light-delivering hole (244) of the board.

12. A light source of illumination (200;200') for a light guide as claimed in any of claims 9 to 11, wherein the light-emitting diodes (242) are arranged in plural steps on the board (243).

13. A light source of illumination (200;200') for a light guide as claimed in any of claims 9 to 12, wherein the concave mirror (241) has a shape obtained by cutting a circle along parallel straight lines each connecting opposite points on the circumference of the circle.

14. A light source of illumination (200;200') for a light guide as claimed in any of claims 9 to 13, wherein respective faces of the polyhedral reflection mirror (252; 253) are constituted by a concave curved surface (252a;253a).
